# EUROPEAN PATENT APPLICATION

(11) **EP 0 529 224 A2**
(43) Date of publication of application: **03.03.1993**
(21) Application number: 92110401.4
(22) Date of filing: 19.06.1992
(51) Int. Cl.: B23D 25/12, B23D 36/00

(54) **Shear control**

(30) Priority: 30.07.1991 US 738190
(71) Applicant: AZDEL, INC., Shelby, North Carolina 28150 (US)
(72) Inventor: Chumley, Michael George, Shelby, North Carolina 28105 (US); Canipe, Derrick Robert, Shelby, North Carolina 28150 (US)
(74) Representative: Schoppe, Fritz, Dipl.-Ing.

(57) **Abstract**

Apparatus for controlling a reciprocable shear associated with a rotatable shaft (12) includes an indicator (20) sensor (18) and signal generator communicating with and controlling a pneumatic brake (13) and clutch associated with the shaft (12). A mechanism is provided for rotating the shaft (12) at high speed, then arresting the rotation of the shaft (12) while holding the operation to a single rotation, and finishing the cycle with the shaft (12) and associated shear blade in a predetermined orientation. A method for controlling the final shaft orientation is also disclosed.

## Description

### FIELD OF THE INVENTION

The present invention relates to a method and apparatus for controlling the operation of a rotary shaft, and more particularly to apparatus for accurately causing a rotary shaft to make a single rotation, stopping in a predetermined orientation.

### BACKGROUND OF THE INVENTION

When rotary shafts are used for line shear for the purpose of cutting a sheet, strip, or panel of elongated materials to length, in a continuous production line without stopping the production line at intervals for operating the shear, it is necessary to provide means for operating the shear at a very high cyclical rate, such as 200 to 300 strokes per minute, but to operate for only a single stroke at such rate, until such time as another desired length of material is produced and placed in proper position for cutting to length. Each movement of the shear must begin and end at the most advantageous orientation with respect to the workpiece in order to develop the optimum kinetic energy at maximum power, it can cause damage to the product from incomplete shearing, or the shear blade can negatively impact the operation of the production line by unduly delaying forward progress of the continuously formed product.

### THE PRIOR ART

Although applicants have made no search of the prior art, applicants are unaware of any devices, particularly shear control systems, which are similar to the invention, or which will accomplish applicants' objectives.

### DESCRIPTION OF THE PRIOR ART

A known shear control mechanism, which is used on Wysong shears manufactured by the Wysong & Miles Company of Greensboro, North Carolina, has about sixty parts, is chain driven, and at least a portion of it is situated within a housing which is difficult to reach for purposes of repair or replacement whenever operation of the shear is faulty or erratic.

The present invention is related to a reciprocal shear and constitutes a control switch for stopping the shear after it has been activated. In each instance the shear is to make but a single reciprocal movement down and through the material being cut and returning to a stand by position. The shear control switch is applicable to the Wysong high speed cut to length line shears, and particularly to model HS1260 RKB, manufactured by the Wysong & Miles Company of Greensboro, North Carolina.

The shear is provided with a fixed base knife and a reciprocal cutting knife which is mounted above it. A cam arrangement moves the upper knife into proximal contact with the lower knife and returns it. However, once the upper shear is activated, it will continue to reciprocate, cutting or chopping the material beneath it on a continuous basis until such time as a stop mechanism is employed.

### SUMMARY OF THE INVENTION

The invented shear control device is mounted adjacent an external clutch assembly or brake assembly, preferably on a retaining plate surrounding the central shaft or the main drive shaft of a shear. A bolt or other positive indicator mechanism is mounted on the perimeter of the shaft or a shaft collar. A sensing device, such as a proximity switch detects the indicator, de-energizing the switch when it senses the indicator, generating and transmitting a signal to a relay, to de-energize an adjacent coil. This causes a switch which is connected to the clutch to open and it disengages the clutch, and another switch connected to the brake to activate and energize the brake. The brake is pneumatic so that when the circuit is energized the air is off. When the circuit is de-energized, the air forces the brake into contact with a friction plate or brake disc, stopping the rotary movement of the shaft. The clutch requires power for the air or pneumatics to be present within the clutch to make it operate, which is exactly the opposite the operation of the brake. The brake acts more like a dead-man switch, where the air moves into the bladders, or other containers for receiving air, forcing the bladder against the friction plate or brake disc, which cause rotation of the shaft to cease, and in effect the brake operates.

Depending on the location of the proximity switch about the circumference of the collar, the speed in revolutions per minute (RPMs) can be varied anywhere from 200 to 1000.

The prior art device generally has a useful life of from about 250,000 to 500,000 cycles, whereas the present device has been used over 2,600,000 cycles without any down time, nor maintenance, nor repair. There are no moving parts (with exception of the contacts) which means there are no parts subject to wear in the invented brake control for a shaft.

In summary, the invention encompasses an improved method and apparatus for controlling exactly the number of cycles a rotary shaft makes, and its final orientation.

### OBJECTS OF THE INVENTION

It is the principal object of the present invention to provide a means for controlling the operation of a rotary unit to a single revolution.

It is also an object to this invention to provide means for controlling a reciprocating blade.

It is another object of this invention to provide means for arresting rotation and controlling the final orientation of a shaft operating at a high speed.

Another object of the invention is to provide a shear control which is easy to install and maintain.

Another object of the invention is to provide a shear control which is readily adjustable.

It is also an object of the invention is to provide a method for simultaneously controlling clutch and brake apparatus operating on a shaft.

### BRIEF DESCRIPTION OF THE DRAWINGS

The foregoing and other, objects will become more readily apparent by referring to the following detailed description and the appended drawings in which:
Figure 1 is an end view of the invented apparatus for controlling a shaft, shown mounted on the shaft housing.
Figure 2 is a schematic diagram of a circuit embodying the invention.

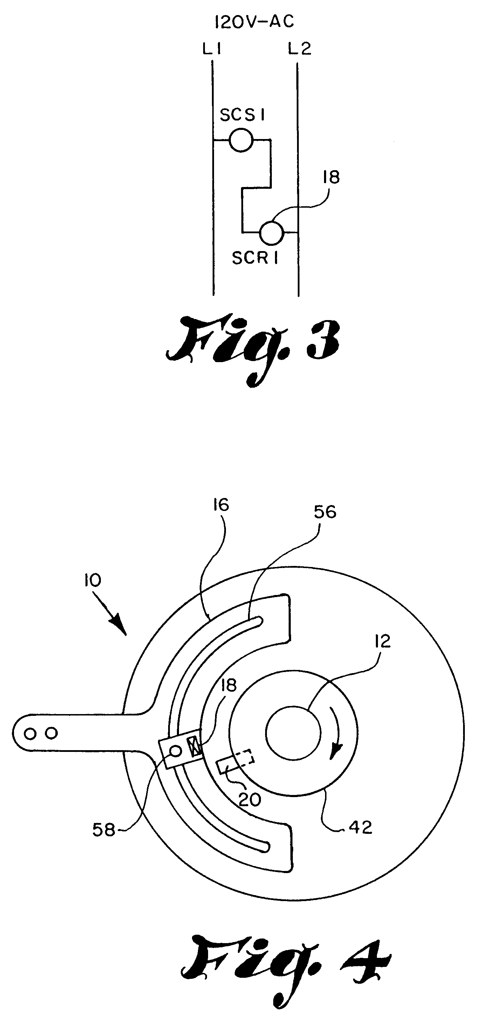

Figure 3 is a schematic diagram of a circuit for controlling the shear control relay embodied in the invention.
Figure 4 is an end view of an alternative embodiment of the invented apparatus for controlling a shaft, shown mounted on the shaft housing.

### DETAILED DESCRIPTION

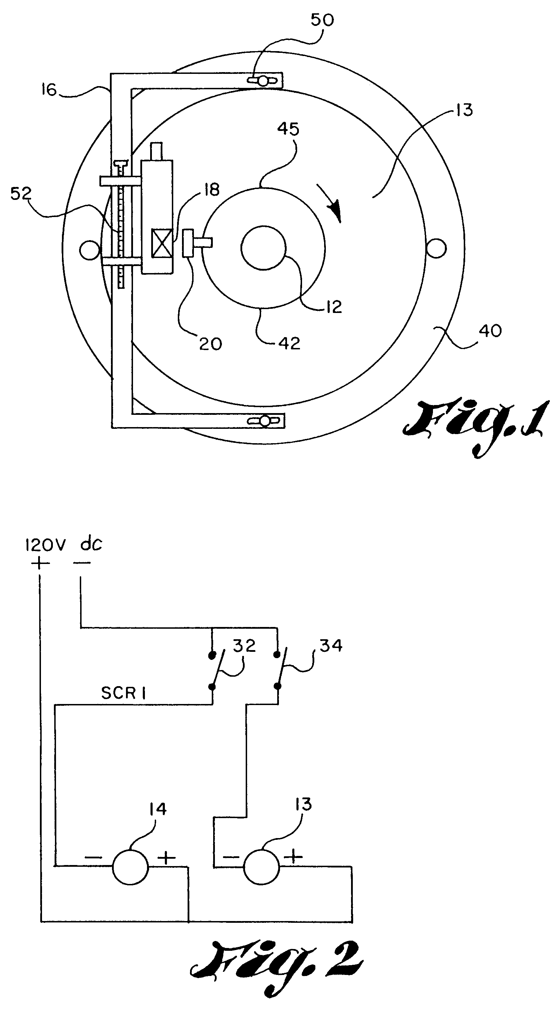

Referring now to the drawings, and particularly to Figure 4, which shows the preferred embodiment of the present invention, an apparatus 10 is provided for controlling the rotation of shaft 12 of a shear (not shown). The direction of rotation of the shaft is indicated on Figures 1 and 4.

The shear is provided with a brake system 13, such as a Wichita brake disc unit, and clutch system 14, such as a Wichita clutch disc unit. The apparatus 10 includes a mounting bracket 16 which carries a sensor 18. An indicator 20, such as a bolt, stud, screw, or similar device is mounted on the shaft 12, or on a collar 42, which itself is mounted on the rotatable shaft 12. The bolt 20, which projects from the collar, triggers the proximity switch 18 once during each complete revolution of the shaft.

Upon triggering the switch 18, an impulse is generated and sent to a coil SCR1 (or shear control relay) which becomes de-energized, opening the normally closed contacts 32 and 34, shown in Figure 2. When contact 32 is opened it disengages the clutch 14. When contact 34 is opened it energizes the brake 13 cutting off the air supply to the brake.

The invented shear control is mounted on an external clutch assembly or brake assembly, on an end plate 40 on the central shaft on the main drive shaft of the shear, which plate 40 holds in place the respective brake unit or clutch unit. The projecting indicator 20 is mounted on the perimeter of the shaft 12 or the shaft collar 42. The sensing device 18 is preferably a proximity switch or other convenient sensor, such as a shielded inductive proxmity switch, type PJF, made by Square D, and is mounted on the mounting bracket 16 adjacent the shaft. When the proximity switch 18, shown on the wiring diagram as SCS1 (shaft control switch) is de-energized as it senses the indicator 20, it sends a signal to open the contacts 32 and 34. Contact 32, which is connected to the clutch, is opened which disengages the clutch, and contact 34, which is connected to the brake 13, is opened activating the pneumatic brake. While the brake circuit is energized, the air is off, when the circuit is de-energized then the air forces the brake into contact with the shaft 12 and stops the rotary movement of the shaft. The clutch requires power for the air or pneumatics to be present within the clutch to make it operate, which is exactly the opposite for the brake.

On Figure 1, top dead center is indicated by reference numeral 45, and this is the location of the shaft with the shear in the ready position.

Any wear in the brake unit or brake pack can be compensated for by vertical adjustment of the sensing device so that the shaft and associated shear will stop at the desired predetermined location.

In operation, an associated counter, which is preferably a pulser, counts a certain number of pulses per lineal distance moved by a workpiece passing under the pulser, or preferably measures movement of the web on which the workpiece is conducted, or measures the rotation of a web roller shaft, and after a predetermined number of pulses, the shear is activated. Only one turn of the shear shaft is desired to make a proper cut.

Mounting bracket 16 can be mounted on the housing as shown in Figure 1, with horizontal adjusting slots 50 and vertical sensor adjusting mechanism, or screw, 52. Alternatively, as shown in Figure 4, the mounting bracket 16 can be curved, with a slot 56 therein for receiving a sensor mounting bolt 58, which allows adjustment of the sensor location throughout the full length of the slot 56. Thus either mounting bracket arrangement allows adequate adjustment of the location of sensor 18 to result in accurate stopping of the shaft 12.

### SUMMARY OF THE ACHIEVEMENT OF THE OBJECTS OF THE INVENTION

From the foregoing, it is readily apparent that we have invented an improved method and apparatus for controlling the operation of a rotary unit to a single revolution, means for controlling a reciprocating blade, and adjustable means for stopping and controlling the final location and the orientation of a shaft which is operating at a high speed.

It is to be understood that the foregoing description and specific embodiments are merely illustrative of the best mode of the invention and the principles thereof, and that various modifications and additions may be made to the apparatus by those skilled in the art, without departing from the spirit and scope of this invention, which is therefore understood to be limited only by the scope of the appended claims.

## Claims

1. Apparatus for controlling the rotation of a high speed rotary-operable shaft, comprising:
a housing;
a shaft rotatable in said housing;
drive means associated with said shaft for rotating said shaft;
brake means associated with said shaft for arresting the rotation of said shaft;
signal means carried by said shaft for generating a signal;
a mounting bracket fixed to said housing;
non-contacting signal sensing means mounted on said mounting bracket in spaced relation to said shaft; and
means actuatable by said signal sensing means for simultaneously actuating said brake means and ceasing the imparting of rotation to said shaft, whereupon the shaft is stopped in a predetermined orientation.

2. Apparatus according to claim 1, wherein said drive means for rotating said shaft is a clutch assembly and an electric motor connected to said shaft through said clutch assembly.

3. Apparatus according to claim 1, wherein said brake means for arresting the rotation of said shaft is a pneumatically-actuated brake system engageable with said shaft.

4. Apparatus according to claim 1, wherein said signal sensing means is a proximity switch.

5. Apparatus according to claim 1, wherein said means for generating a simultaneous arresting of said shaft and ceasing the imparting of rotation to said shaft is a relay whereby an electrical impulse is transmitted to two sets of contacts, one set disengaging the drive means, the second set engaging the brake means.

6. Apparatus according to claim 1, wherein said mounting bracket includes means for adjustably mounting said sensing means thereon.

7. Apparatus according to claim 1 further comprising means for adjusting said mounting bracket.

8. A method for controlling the rotation of a shaft to a single rotation, and stop the shaft in a predetermined orientation, the shaft having an associated clutch-engaged drive mechanism and an associated braking mechanism, the method comprising:
providing an indicator on the perimeter of the shaft;
initiating rotation of the shaft;
detecting the instantaneous shaft orientation by sensing the indicator as it reaches a predetermined indicator position during one revolution;
generating a signal simultaneously to the clutch mechanism and the braking mechanism; and
causing the clutch to disengage and the braking mechanism to activate simultaneously, bringing the shaft rotation to a halt with the shaft at the predetermined orientation.
